# EUROPÄISCHE PATENTSCHRIFT

(11) **EP 0 413 225 B1**
(45) Veröffentlichungstag und Bekanntmachung des Hinweises auf die Patenterteilung: **30.11.1994**
(21) Anmeldenummer: 90115055.7
(22) Anmeldetag: 06.08.1990
(51) Int. Cl.: H04N 5/44

(54) **Elektrisches zeitgesteuertes Zahlenschloss zur Sicherung eines Gerätes gegen unbefugte Benutzung**
Electric time-controlled combination lock for protection against unauthorized use
Serrure à combinaison électrique commandée en temps pour la protection d'un appareil contre une utilisation non autorisée

(30) Priorität: 16.08.1989 DE 3926939
(43) Veröffentlichungstag der Anmeldung: 20.02.1991
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Rosenberger, Winfried, Dipl.-Ing. (FH), Kurgartenstrasse 37, D-8510 Fürth/Bay. (DE)
(74) Vertreter: Dreykorn-Lindner, Werner, Dipl.-Ing.

(56) Entgegenhaltungen:
- EP-A- 0 112 589
- EP-A- 0 178 866
- US-A- 4 510 623
- FUNKSCHAU, Band 57, Nr. 25, Dezember 1985, Seiten 47-51, München, DE; W. SOMMERHAÜSER: "Video Programm System: Flexibel programmieren mit VPS"

## Beschreibung

Die Erfindung betrifft ein elektrisches zeitgesteuertes Zahlenschloß, zur Sicherung eines Geräts gegen unbefugte Benutzung.

Elektrische Zahlenschlösser zur Sicherung von Geräten, beispielsweise von Geräten der Unterhaltungselektronik, gegen unbefugte Benutzung sind seit längerem bekannt. Beispielsweise ist aus der DE-A- 32 28 354 eine benutzerführende Bedienung bei Geräten der Unterhaltungselektronik bekannt, bei der u.a. der Benutzer verschiedene Sperrcodes (Codeworte) eingeben kann. Diese Sperrcodes werden in elektrisch änderbaren bzw. löschbaren Festwertspeichern (EAROM, EEROM) gespeichert. Dadurch sind am Gerät verschiedene Bedienungsfunktionen nicht mehr auslösbar, so daß durch die Eingabe einer Zahlenkombination (Ziffern 0 bis 9) die Funktion "Verriegeln bzw. Entriegeln" des elektrischen Zahlenschlosses erzielt wird. Das dort beschriebene Gerät ist vorzugsweise ein Fernsehempfänger, welcher einen Videotextgenerator für die Anzeige von Bedienungshinweisen enthält. Ist das Schloß verriegelt, so kann die Wiedergabesperre nur durch Eingabe des Codeworts wieder aufgehoben werden. Bei verriegeltem elektrischen Zahlenschloß ist keine Wiedergabe von Videorecorder-Aufzeichnungen bzw. kein Empfang von Fernsehsendungen mehr möglich. Gleiches gilt für die aus der Zeitschrift "Funktechnik 40 (1985) , Heft 9, Seiten 361 bis 365, insbesondere Seite 364 bzw. aus der DE-A- 38 22 062 bekannten Fernsehgeräte.

Aus der US-A-4,510,623 ist ein Fernsehempfänger bekannt, bei welchem nach Eingabe eines Codes durch den Benutzer eine Verriegelung eines oder mehrerer Kanäle für eine bestimmte Zeitspanne vorliegt. Ist die genannte Zeitspanne abgelaufen, dann wird die Verriegelung automatisch aufgehoben. Weiterhin ist auch eine vorherige Aufhebung der Verriegelung durch Eingabe eines Entriegelungscodes mittels der Bedieneinheit möglich.

Aus der EP-A-0 178 866 ist es zusätzlich bekannt, in einem Fernsehsender eine Zusatzinformation zu erzeugen und diese zusammen mit dem Fernsehsignal zum Empfänger zu übertragen. Diese Zusatzinformation wird im Empfänger aus dem Fernsehsignal abgetrennt und bewirkt eine Verriegelung der Wiedergabe. Diese Verriegelung wird erst dann aufgehoben, wenn der Benutzer einen Freigabecode eingibt, welcher mit einem im Empfänger abgespeicherten Code übereinstimmt.

Weiterhin ist in der Zeitschrift Funkschau 25/1985, S. 47 - 51, das sogenannte VPS-System beschrieben, gemäß welchem zusammen mit dem Fernsehsignal Zusatzinformationen übertragen werden, die sowohl den jeweiligen Beitrag als auch die Programmquelle eindeutig kennzeichnen. Dadurch kann sichergestellt werden, daß auch bei einer unvorhergesehenen zeitlichen Verschiebung eines Sendebeitrags eine Magnetbandaufzeichnung des Sendebeitrags zeitgerecht durchgeführt werden kann. In den zusammen mit den Fernsehsignalen übertragenen Zusatzinformationen können auch Kennbits enthalten sein, die eine Sendung als jugendfrei oder nicht jugendfrei kennzeichnen.

Auch elektrische zeitgesteuerte Schlösser, vorzugsweise Zahlenschlösser, für verschiedenartige Anwendungsfälle, z.B. Diebstahlsicherung, Sicherheitseinrichtungen usw. sind bekannt. In Geräten der Unterhaltungselektronik kann ein solches elektrisches, zeitgesteuertes Schloß besonders dann hilfreich sein, wenn der Benutzer das Codewort vergißt. Dadurch könnte der normale Betriebszustand des Geräts nicht mehr hergestellt werden. Zur Entriegelung des elektrischen Schlosses muß der Benutzer mühsam eine Vielzahl unterschiedlicher Codeworte durchprobieren, bis er zufällig das richtige Codewort eingegeben hat. Um zu verhindern, daß der normale Betriebszustand nicht mehr hergestellt werden kann, ist es aus der EP-A-0 153 602 bekannt, zusätzlich zum Codewort (z.B. Zahlenkombination) einen Zeitpunkt einzugeben, bei dessen Erreichen die durch die Zahlenkombination ausgelöste Sonderfunktion spätestens beendet wird.

Eine weitere Ausführungsform eines elektrischen zeitgesteuerten Schlosses ist aus der DE-A- 32 43 610 bzw. der hierzu korrespondierenden EP-A-0 112 589 bekannt. Bei der Programmierung kann der Benutzer mit der Bedienungseinrichtung bestimmte Sendungen mit Codeworten (Sperrdaten) versehen. Diese Daten (sowie zusätzlich vom Benutzer eingegebene Prioritätsdaten, mit denen der Benutzer einer Fernsehsendung eine bestimmte Priorität zur Wiedergabe geben kann) werden in einen Speicher eingeschrieben, wodurch der Empfang bzw. die Wiedergabe der Sendung gesperrt ist (Kindersicherung). Diese Programmierung des Empfängers verlangt vom Benutzer genaue Kenntnisse der meist umfangreichen Bedienungsanleitung für die Eingabe der verschiedenen Daten.

Der Erfindung liegt die Aufgabe zugrunde, eine Einrichtung zur Sicherung eines Gerätes gegen unbefugte Benutzung derart auszugestalten, daß auf einfache Art und Weise die Sperrung der Wiedergabe bestimmter Fernsehsendungen ermöglicht wird.

Diese Aufgabe wird bei einer gattungsgemäßen Einrichtung durch die kennzeichnenden Merkmale des Patentanspruchs 1 gelöst.

Die erfindungsgemäße Einrichtung weist den Vorteil auf, daß die Vorprogrammierung von Empfängern, z.B. Fernsehempfängern, Videorecordern usw. , vom Benutzer einfach durchzuführen ist, wobei zusätzlich auch eine vereinfachte Bedienung für den Benutzer bei der Eingabe von Codeworten zur Sicherung des Geräts gegen unbefugte Benutzung erreicht wird.

Ist anstelle des Datendecoders im Gerät ein Videotextdecoder angeordnet, so kann der Benutzer mit Hilfe einer Markierung, welche in die auf dem Bildschirm eines Fernsehempfängers gezeigte Programmtafel einblendbar ist, eine Auswahl und Programmierung der Fernsehsendung vornehmen.

Die erfindungsgemäße Einrichtung kann auch beim TOP(table of pages)-Verfahren eingesetzt werden, bei dem die einzelnen Videotextseiten nach Themenbereichen geordnet sind. Hierzu werden die Datenblöcke, die in bestimmten Datenzeilen innerhalb der Vertikalaustastlücke des Fernsehsignals neben der laufenden Videoinformation übertragen werden, mit Hilfe des Videotextdecoders in auf dem Bildschirm des Fernsehempfängers darstellbare Tafeln umgewandelt. Der Zuschauer kann dadurch auf mehreren Hundert Tafeln das Neueste aus Politik, Wirtschaft, Kultur und Sport abrufen. Neben der Auswahl mit Hilfe einer Markierung, wie dies beispielsweise aus der DE-C- 33 35 082 bekannt ist, kann auch das Einschreiben der zur Programmierung der Fernsehsendung erforderlichen Daten in den Speicher dann vorgenommen werden, wenn die in den Übersichtsseiten (Tafeln) angegebenen Schriftzeilen zeitlich nacheinander für einen bestimmten Zeitraum erkennbar verändert werden. Dies ist an sich aus der DE-C- 33 37 204 bekannt. Gleiches kann auch für die Eingabe des Codeworts durch den Benutzer durchgeführt werden. Durch die Steuereinrichtung kann auch eine Bedienerführung erfolgen, wobei beispielsweise die Schriftzeile mit der Frage "Soll ein Codewort eingegeben werden?" erkennbar verändert wird. Falls ja, wird vom Benutzer ein entsprechendes Quittungssignal an der Bedienungseinrichtung eingegeben; im anderen Fall wird die nächste Schriftzeile erkennbar verändert (z.B. farbig unterlegt).

Die Ausführungsform der Einrichtung gemäß Patentanspruch 2 weist den Vorteil auf, daß - bei einer Verschiebung der Anfangszeit einer bestimmten Fernsehsendung - diese Fernsehsendung auch weiterhin am Gerät nicht wiedergegeben werden kann. Aus der DE-C- 34 24 812 ist eine senderseitige Steuerung des Empfängers bei Verschiebungen des ursprünglichen Programmbeitrags bekannt. Durch die Wahl einer geringfügig früheren oder späteren Anfangszeit kann sendeseitig der Empfänger derartig gesteuert werden, daß dieser seinen Lauerbetrieb beendet oder fortsetzt.

Dabei können auch Programmbeitrags-Verschiebungen über das Programm-Ende eines VPS-Tags hinaus berücksichtigt werden, wie dies in der nicht vorveröffentlichten deutschen Patentanmeldung mit dem amtlichen Aktenzeichen P 39 07 098.0 beschrieben ist.

Das Zahlenschluß gemäß der Erfindung weist den Vorteil auf, daß bei einer Gerätekombination, bei der in jedem der Geräte ein Datendecoder bzw. Videotextdecoder angeordnet ist, nicht die gesperrte Wiedergabe einer bestimmten Fernsehsendung umgangen werden kann. Ist beispielsweise das im Fernsehempfänger angeordnete Schloß verriegelt, so könnte mit einem Videorecorder diese Sperre unwirksam gemacht werden. Durch den Austausch der Codeworte (der für die Wiedergabe gesperrt gekennzeichneten Fernsehsendungen) zwischen den beiden Geräten kann erreicht werden, daß beispielsweise der Videorecorder die Fernsehsendung aufnimmt, während die Wiedergabesperre für den Fernsehempfänger wirksam ist und daß danach eine Wiedergabe der aufgezeichneten Fernsehsendung am Fernsehempfänger erst dann möglich ist, wenn die Wiedergabesperre wieder aufgehoben wird.

Die Ausführungsform der Einrichtung gemäß Patentanspruch 4 weist den Vorteil auf, daß im Falle einer Wiedergabesperre des Fernsehempfängers dem Benutzer ein Hinweis gegeben wird. Beispielsweise erscheint an einer Anzeigeeinheit bzw. in einem auf dem Bildschirm des Fernsehempfängers einblendbaren Anzeigefeld der entsprechende Hinweis. Daneben ist es auch möglich, den Benutzer durch eine akustische Ausgabe auf die Wiedergabesperre hinzuweisen.

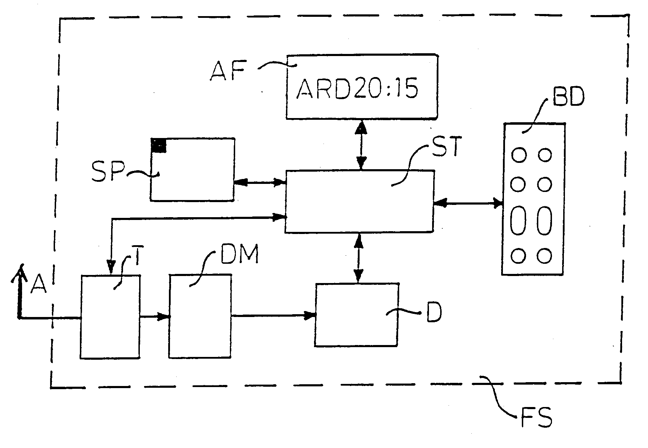

Die erfindungsgemäße Einrichtung wird im folgenden anhand einer in der Zeichnung dargestellten Ausführungsform näher beschrieben und erläutert. Dabei wird von dem Anwendungsfall in einem Fernsehempfänger ausgegangen, wobei auch die Anwendung bei anderen Empfängern, beispielsweise Videorecordern möglich ist, sofern diese einen Datendecoder bzw. Videotextdecoder enthalten. Im Fernsehempfänger FS ist ein Datendecoder D (VPS-Decoder) angeordnet, welcher die zur Empfängersteuerung auf Empfang bestimmter Fernsehsendungen dienenden Zusatzinformationen einer Datenzeile (z.B. Zeile 16 bei einem PAL-Fernsehübertragungssystem) während der Vertikalaustastlücke des Fernsehsignals entnimmt. Diese der Datenzeile entnommenen Daten werden einer mit dem Datendecoder D verbundenen Steuereinrichtung ST zugeführt. Werden die Zusatzinformationen nicht nur programmbegleitend, sondern in Form von Programmübersichten gesendet, so kann der Benutzer - entsprechend dem bei Videotext (Fernsehtext) gebotenem Bedienkomfort - eine einfache und fehlerfreie Programmierung vornehmen.

Zur Vorprogrammierung kann der Benutzer mit Hilfe der Bedienungseinrichtung BD (welche z.B. auch eine Fernbedienungseinrichtung sein kann) und der Steuereinrichtung ST die Abstimmung eines Tuners T auf einen bestimmten Empfangskanal (Programmquelle) vornehmen. Zur sichtbaren Darstellung der über eine Antenne A, dem Tuner T, einem Demodulator DM und dem Datendecoder D der Steuereinrichtung ST zugeführten Zusatzinformationen ist die Steuereinrichtung ST mit einer Anzeigeeinrichtung AF verbunden. Vorzugsweise erfolgt eine Anzeige in einem auf dem Bildschirm des Fernsehempfängers FS einblendbaren Anzeigefeld AF. Der Benutzer wählt unter den im Anzeigefeld AF dargestellten Zusatzinformationen aus und auf Befehl werden die zwischengespeicherten Zusatzinformationen endgültig in den Speicher SP des Fernsehempfängers FS eingegeben. In gleicher Weise erfolgt die Vorprogrammierung, wenn im Fernsehempfänger FS ein Videotextdecoder angeordnet ist, wobei der Benutzer die Auswahl in den Übersichtseiten bzw. Tafeln trifft. Die Auswahl durch Markierung bzw. Quittierung kann auch beim TOP-Verfahren eingesetzt werden, wie dies in der nicht vorveröffentlichten deutschen Patentanmeldung mit dem amtlichen Aktenzeichen P 39 13 726.0 beschrieben ist.

Mit Hilfe der Steuereinrichtung ST werden diese zur Gerätesteuerung auf Empfang bestimmter Fernsehsendungen benötigten Daten zusammen mit dem an der Bedienungseinrichtung BD eingegebenen Codewort in den Speicher SP eingeschrieben. Dadurch ist die Wiedergabesperre für eine bestimmte Fernsehsendung wirksam. Im Falle einer sendergesteuerten Umprogrammierung der zu der Fernsehsendung zugehörigen Daten bleibt die Wiedergabesperre für diese bestimmte Fernsehsendung weiterhin wirksam. Die Steuereinrichtung ST nimmt entweder eine entsprechende Korrektur der im Speicher SP enthaltenen Daten vor oder löscht diese Daten und speichert die neuen Daten ab, wobei die Zuordnung von Codewort und Fernsehsendung weiterhin erhalten bleibt.

Im Falle einer Gerätekombination, beispielsweise Fernsehempfänger FS und Videorecorder mit jeweils einem im Gerät angeordneten Datendecoder bzw. Videotextdecoder, und erfolgter Ersteingabe von Daten und Codewort in einem Gerät durch den Benutzer, erfolgt jeweils ein Datenaustausch zwischen den Geräten der Gerätekombination. Die Datenübertragung zwischen den beiden Geräten kann entweder über eine Steuerleitung oder über eine drahtlose Übertragungsstrecke, beispielsweise Infrarot-Übertragungsstrecke, oder durch Einfügung in das Videosignal erfolgen.

Bei einer in der Zeichnung nicht dargestellten Ausführungsform werden die Daten der zur Wiedergabe gesperrten Fernsehsendungen (oder die Daten, z.B. Bandpositionen des aufgezeichneten und gesperrten Programms oder der gesperrten Videocassetten) in einen bestimmten Speicherbereich eingeschrieben. Dabei ist von Vorteil, daß der Gerätebenutzer für das automatische Einschreiben lediglich einen Steuerbefehl und nicht das Codewort eingeben muß und daß er sich zur Entsperrung nur ein bestimmtes Codewort merken muß, welches diesem Speicherbereich zugeordnet ist.

## Patentansprüche

1. Elektrisches zeitgesteuertes Zahlenschloß zur Sicherung eines Gerätes, insbesondere eines Fernsehempfängers (FS), gegen unbefugte Benutzung, mit
- einer Bedienungseinrichtung (BD), mittels der ein Codewort und Daten zur Auswahl einer bestimmten Fernsehsendung eingebbar sind,
- einer Steuereinrichtung (ST),
- einem Datendecoder (D) zur Entnahme der zur Gerätesteuerung auf Empfang dieser bestimmten Fernsehsendung benötigten Daten aus mindestens einer Datenzeile des Fernsehsignals mit Hilfe der Steuereinrichtung (ST), und
- einem Speicher (SP) zur Speicherung der mittels des Datendecoders (D) entnommenen Daten und des Codewortes, um das Schloß für die bestimmte Fernsehsendung zu verriegeln,
**dadurch gekennzeichnet**, daß im Falle einer Gerätekombination mit in jedem Gerät angeordnetem Datendecoder und erfolgter Ersteingabe von Daten und Codewort in einem Gerät die in dem Gerät angeordnete Steuereinrichtung automatisch die gespeicherten Daten und das Codewort aus dem Speicher (SP) ausliest und in einen Speicher eines zweiten Gerätes einschreibt.

2. Zahlenschloß nach Anspruch 1,
**dadurch gekennzeichnet**, daß auch bei einer sendergesteuerten Umprogrammierung der zu der Fernsehsendung zugehörigen Daten das Schloß für diese bestimmte Fernsehsendung weiterhin verriegelt bleibt.

3. Zahlenschloß nach Anspruch 1,
**dadurch gekennzeichnet**, daß in einem auf dem Bildschirm des Fernsehempfängers (FS) einblendbaren Anzeigefeld (AF) die Sperrung der Wiedergabe oder die Daten der zur Wiedergabe gesperrten Fernsehsendung angezeigt werden.

4. Zahlenschloß nach einem oder mehreren der Ansprüche 1 bis 3,
**dadurch gekennzeichnet**, daß die Daten der zur Wiedergabe gesperrten Fernsehsendungen in einem bestimmten Speicherbereich eingeschrieben werden, wobei diesem Speicherbereich genau ein Codewort zugeordnet ist.

## Claims

1. Electric time-controlled numerical lock for securing an item of equipment, in particular a television receiver (FS), against unauthorized use, having
- an operator-control device (BD), by means of which a code word and data for the selection of a particular television programme can be entered,
- a control device (ST),
- a data decoder (D) for removal of the data required for equipment control to reception of this particular television programme from at least one data line of the television signal with the aid of the control device (ST), and
- a memory (SP) for storage of the data removed by means of the data decoder (D) and of the code word in order to lock the lock for the particular television programme,
characterized in that, in the case of an equipment combination with a data decoder arranged in each item of equipment and initial entry of data and code word in an item of equipment having taken place, the control device arranged in the item of equipment automatically reads out the stored data and the code word from the memory (SP) and writes the said data and the code word to a memory of a second item of equipment.

2. Numerical lock according to Claim 1, characterized in that, in the event of a transmitter-controlled reprogramming of the data belonging to the television programme, the lock for this particular television programme continues to remain locked.

3. Numerical lock according to Claim 1, characterized in that the blocking of playback or the data of the television programme blocked for playback are displayed on a display panel (AF) which can be superimposed on the screen of the television receiver (FS).

4. Numerical lock according to one or more of Claims 1 to 3, characterized in that the data of the television programmes blocked for playback are written in a particular memory area, this memory area being assigned precisely one code word.

## Revendications

1. Serrure électrique à combinaison à commande temporelle pour protéger un appareil, notamment un récepteur de télévision (FS), vis-à-vis d'une utilisation non autorisée, comportant
- un dispositif de manoeuvre (BD), au moyen duquel un mot de code et des données pour la sélection d'une émission de télévision déterminée peuvent être introduits,
- un dispositif de commande (ST),
- un décodeur de données (D) pour prélever des données nécessaires pour la commande de l'appareil lors de la réception de cette émission de télévision déterminée, à partir d'au moins une ligne de données du signal de télévision, à l'aide du dispositif de manoeuvre (ST), et
- une mémoire (SP) servant à mémoriser des données prélevées au moyen du décodeur de données (D) et le mot de code, pour verrouiller la serrure pour l'émission de télévision déterminée,
caractérisée en ce que, dans le cas d'une combinaison d'appareils comportant un décodeur de données disposé dans chaque appareil et dans le cas où une première entrée de données d'un mot de code dans un appareil a été exécutée, le dispositif de commande disposé dans l'appareil lit automatiquement les données mémorisées et le mot de code à partir de la mémoire (SP) et l'enregistre dans une mémoire d'un second appareil.

2. Serrure à combinaison selon la revendication 1, caractérisée en ce que, également dans le cas d'une reprogrammation, commandée au niveau de l'émetteur, des données associées à l'émission de télévision, la serrure reste verrouillée pour cette émission de télévision déterminée.

3. Serrure à combinaison selon la revendication 1, caractérisée en ce que dans un panneau d'affichage (AF) pouvant être inséré sur l'écran du récepteur de télévision (FS), le blocage de la reproduction ou les données de l'émission de télévision bloquée pour la reproduction sont affichés.

4. Serrure à combinaison selon une ou plusieurs des revendications 1 à 3, caractérisée en ce que les données des émissions de télévision bloquées pour la reproduction sont enregistrées dans une zone déterminée de la mémoire, à laquelle est associée de façon précise un mot de code.
